(19) Europäisches Patentamt / European Patent Office / Office européen des brevets

(11) **EP 3 414 934 B1**

(12) **EUROPEAN PATENT SPECIFICATION**

(45) Date of publication and mention
of the grant of the patent:
**08.09.2021 Bulletin 2021/36**

(21) Application number: **16890108.0**

(22) Date of filing: **09.12.2016**

(51) Int Cl.:
*H04W 24/10* (2009.01)     *H04W 56/00* (2009.01)
*H04B 7/26* (2006.01)     *H04W 24/00* (2009.01)

(86) International application number:
**PCT/US2016/065807**

(87) International publication number:
**WO 2017/139014 (17.08.2017 Gazette 2017/33)**

(54) **RX-TX TIME DIFFERENCE REPORT FOR TDD SYSTEMS AND ASSOCIATED DEVICES**

RX-TX-ZEITDIFFERENZBERICHT FÜR TDD-SYSTEME UND ZUGEHÖRIGE VORRICHTUNGEN

RAPPORT DE DIFFÉRENCE DE TEMPS DE RÉCEPTION-TRANSMISSION POUR DES SYSTÈMES TDD ET DISPOSITIFS ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.02.2016 US 201662292724 P**

(43) Date of publication of application:
**19.12.2018 Bulletin 2018/51**

(73) Proprietor: **Apple Inc.**
**Cupertino, CA 95014 (US)**

(72) Inventors:
- **TANG, Yang**
  **Santa Clara, CA 95052 (US)**
- **HAN, Seunghee**
  **San Jose, California 95120 (US)**
- **YOON, Daejung**
  **Santa Clara, California 95051 (US)**
- **TIAN, Shuang**
  **Santa Clara, California 95054 (US)**
- **HUANG, Rui**
  **Beijing 11 100085 (CN)**

(74) Representative: **Lang, Johannes et al**
**Bardehle Pagenberg Partnerschaft mbB**
**Patentanwälte, Rechtsanwälte**
**Prinzregentenplatz 7**
**81675 München (DE)**

(56) References cited:
**US-A1- 2013 137 454     US-A1- 2015 215 793**
**US-A1- 2015 257 118     US-A1- 2015 289 141**
**US-A1- 2016 007 222     US-A1- 2016 007 222**

- **"3rd Generation Partnership Project; Technical Specification Group Radio Access Network; Evolved Universal Terrestrial Radio Access (E-UTRA); Requirements for support of radio resource management (Release 12)", 3GPP STANDARD; 3GPP TS 36.133, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. V12.10.0, 8 January 2016 (2016-01-08), pages 1161-1470, XP051047614, [retrieved on 2016-01-08]**
- **'Implementation of UE capability for CA Rx-TX performance requirements' R2-156099, 3GPP TSG-RAN WG2 #92 07 November 2015, ANAHEIM, USA, XP051005659**

## Description

### PRIORITY CLAIM

This application claims the benefit of priority to United States Provisional Patent Application Serial No. 62/292,724, filed February 8, 2016, and entitled "RX-TX TIME DIFFERENCE REPORT IN TDD SYSTEMS,".

### TECHNICAL FIELD

Embodiments pertain to radio access networks. Some embodiments relate to transmit/receive timing differences in cellular and wireless local area network (WLAN) networks, including Third Generation Partnership Project Long Term Evolution (3 GPP LTE) networks and LTE advanced (LTE-A) networks as well as 4th generation (4G) networks and 5th generation (5G) networks.

### BACKGROUND

Today, mobile communications are ubiquitous, providing voice and data services via user equipment (UE) that operate on Long Term Evolution (LTE) networks such as mobile handset or smartphone type devices, tablets and laptop computers. The commercial use of positioning has grown tremendously in the last several years, to the extent that many services provided by UEs involve accurate device position determination of UEs either directly employing the positioning or using the positioning for ties to other commercial applications, such as advertisements. Many applications determine position through the use of a Global Positioning System (GPS) or Global Navigation Satellite System (GNSS). However, some UEs may not have GPS capability or GPS, or may be in environments (e.g., indoors) in which GPS may be unreliable or unavailable, for example. Alternative position determination methods may be used, either commercially or for network-related use. These position determination methods may involve accurate determination and use of a timing offset (NTA) between uplink and downlink frames at the UE. NTA may vary with distance between the UE and serving evolved Node B (eNB). While reporting to the eNB of the associated timing advance (TA), which is related to the NTA, at longer distances may not be an issue, when the UE is relatively close to the eNB a disparity may arise between reporting of the TA between a Frequency Division Duplexing (FDD) system and Time Division Duplexing (TDD) system. This may lead to a difference in maximum cell coverage between FDD and TDD cells.

US 2016/007222A1 discloses a method and a network node for controlling configuration of measurements to be performed by a user equipment operating in a wireless communication system wherein a configured measurement corresponds to at least one reporting criteria and the user equipment is able to support a limited number of parallel reporting criteria and according to the preamble of the independent claims.

3GPP TS 36.133, V12.10.0, discloses tests to verify that the E-UTRAN FDD and TDD UE Rx - Tx time difference measurement accuracy is within the specified limits in Clause 9.1.9 thereof according to the preamble of the independent claims.

US 2013/137454 A1 discloses means to provide positioning enhancement to wireless systems to determine UE positioning using UE measurements wherein a method implemented by a UE for enabling positioning calculation includes receiving a Signal to Interference plus Noise Ratio (SINR) threshold from a network for filtering positioning measurements and performing a plurality of positioning measurements.

The present invention is defined by the features of the independent claim(s). Preferred advantageous embodiments thereof are defined by the sub-features of the dependent claims. Any reference to "embodiment(s)", "example(s)" or "aspect(s) of the invention" in this description not falling under the scope of the claims should be interpreted as illustrative example(s) for understanding the invention.

### BRIEF DESCRIPTION OF THE FIGURES

In the figures, which are not necessarily drawn to scale, like numerals may describe similar components in different views. Like numerals having different letter suffixes may represent different instances of similar components. The figures illustrate generally, by way of example, but not by way of limitation, various embodiments discussed in the present document.

FIG. 1 is a functional diagram of a wireless network in accordance with some embodiments.
FIG. 2 illustrates components of a communication device in accordance with some embodiments.
FIG. 3 illustrates a block diagram of a communication device in accordance with some embodiments.
FIG. 4 illustrates another block diagram of a communication device in accordance with some embodiments.
FIG. 5 illustrates Enhanced Cell Identification (ECID) techniques in accordance with some embodiments.

FIG. 6 illustrates a flowchart of a method of location determination in accordance with some embodiments.

## DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

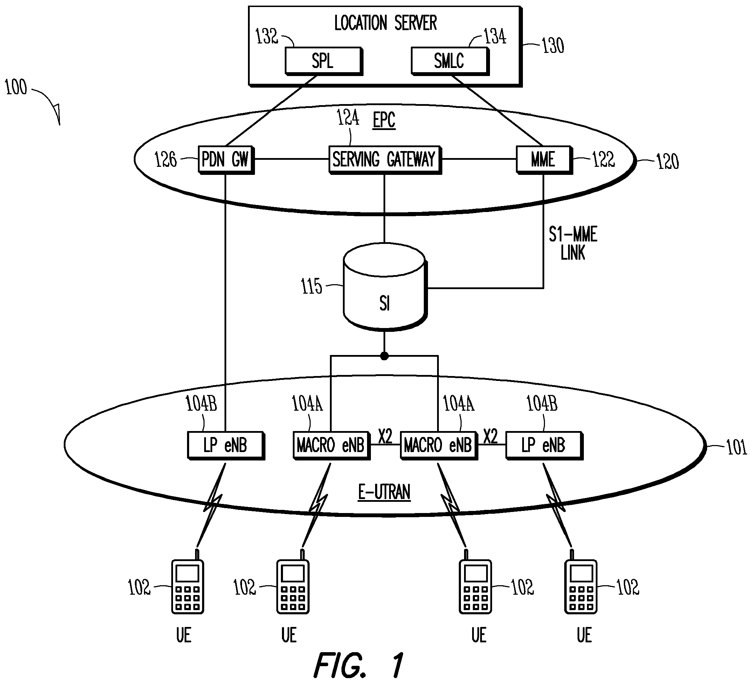

FIG. 1 shows an example of a portion of an end-to-end network architecture of a Long Term Evolution (LTE) network with various components of the network in accordance with some embodiments. As used herein, an LTE network refers to both LTE and LTE Advanced (LTE-A) networks as well as other versions of LTE networks to be developed. The network 100 may comprise a radio access network (RAN) (e.g., as depicted, the E-UTRAN or evolved universal terrestrial radio access network) 101 and core network 120 (e.g., shown as an evolved packet core (EPC)) coupled together through an S1 interface 115. For convenience and brevity, only a portion of the core network 120, as well as the RAN 101, is shown in the example.

The core network 120 may include a mobility management entity (MME) 122, serving gateway (serving GW) 124, and packet data network gateway (PDN GW) 126. The RAN 101 may include evolved node Bs (eNBs) 104 (which may operate as base stations) for communicating with user equipment (UE) 102. The eNBs 104 may include macro eNBs 104a and low power (LP) eNBs 104b. The eNBs 104 and UEs 102 may employ the techniques as described herein.

A UE 102 may perform cell selection upon power-up and cell reselections throughout its operation. The UE 102 searches for a cell. During the cell reselection process, the UE 102 can measure reference signal strength for each neighboring cell (e.g., Reference Signal Received Power/Reference Signal Received Quality (RSRP/RSRQ)) and select a cell based on this measurement (e.g., select a cell with the highest RSRP value). After the UE 102 selects a cell, it can verify the accessibility of the cell by reading the master information block (MIB). If the UE 102 fails to read the MIB of the selected cell, it can discard the selected cell and repeat the above process until a suitable cell is discovered.

A radio resource control (RRC) state indicates whether an RRC layer of the UE 102 is logically connected to an RRC layer of the E-UTRAN 210. After the UE 102 is communicatively coupled to a cell, its RRC state is RRC_IDLE. When the UE 102 has data packets to transmit or receive, its RRC state becomes RRC_CONNECTED. The UE 102, when in an RRC_IDLE state, can associate itself to different cells.

The MME 122 may be similar in function to the control plane of legacy Serving GPRS Support Nodes (SGSN). The MME 122 may manage mobility aspects in access such as gateway selection and tracking area list management. The serving GW 124 may terminate the interface toward the RAN 101, and route data packets between the RAN 101 and the core network 120. In addition, the serving GW 124 may be a local mobility anchor point for inter-eNB handovers and also may provide an anchor for inter-3GPP mobility. Other responsibilities may include lawful intercept, charging, and some policy enforcement. The serving GW 124 and the MME 122 may be implemented in one physical node or separate physical nodes.

The PDN GW 126 may terminate a SGi interface toward the packet data network (PDN). The PDN GW 126 may route data packets between the EPC 120 and the external PDN, and may perform policy enforcement and charging data collection. The PDN GW 126 may also provide an anchor point for mobility devices with non-LTE access. The external PDN can be any kind of IP network, as well as an IP Multimedia Subsystem (IMS) domain. The PDN GW 126 and the serving GW 124 may be implemented in a single physical node or separate physical nodes.

The eNBs 104 (macro and micro) may terminate the air interface protocol and may be the first point of contact for a UE 102. In some embodiments, an eNB 104 may fulfill various logical functions for the RAN 101 including, but not limited to, RNC (radio network controller functions) such as radio bearer management, uplink and downlink dynamic radio resource management and data packet scheduling, and mobility management. In accordance with embodiments, UEs 102 may be configured to communicate orthogonal frequency division multiplexed (OFDM) communication signals with an eNB 104 over a multicarrier communication channel in accordance with an OFDMA communication technique. The OFDM signals may comprise a plurality of orthogonal subcarriers.

The S1 interface 115 may be the interface that separates the RAN 101 and the EPC 120. It may be split into two parts: the S1-U, which may carry traffic data between the eNBs 104 and the serving GW 124, and the S1-MME, which may be a signaling interface between the eNBs 104 and the MME 122. The X2 interface may be the interface between eNBs 104. The X2 interface may comprise two parts, the X2-C and X2-U. The X2-C may be the control plane interface between the eNBs 104, while the X2-U may be the user plane interface between the eNBs 104.

With cellular networks, LP cells 104b may be typically used to extend coverage to indoor areas where outdoor signals do not reach well, or to add network capacity in areas with dense usage. In particular, it may be desirable to enhance the coverage of a wireless communication system using cells of different sizes, macrocells, microcells, picocells, and femtocells, to boost system performance. The cells of different sizes may operate on the same frequency band, or may operate on different frequency bands with each cell operating in a different frequency band or only cells of different sizes operating on different frequency bands. As used herein, the term LP eNB refers to any suitable relatively LP eNB for implementing a smaller cell (smaller than a macro cell) such as a femtocell, a picocell, or a microcell. Femtocell eNBs may be typically provided by a mobile network operator to its residential or enterprise customers. A femtocell may be typically the size of a residential gateway or smaller and generally connect to a broadband line. The femtocell may connect to the mobile operator's mobile network and provide extra coverage in a range of typically 30 to 50 meters. Thus, a LP eNB 104b might be a femtocell eNB. In some embodiments, when the LP eNB 104b is a Home eNB (HeNB), a HeNB Gateway may be provided between the HeNB and the MME/Service Gateway. This HeNB Gateway may control multiple HeNBs and provide user data and signal traffic from the HeNBs towards the MME/Service Gateway. Similarly, a picocell may be a wireless communication system typically covering a small area, such as in-building (offices, shopping malls, train stations, etc.), or more recently in-aircraft. A picocell eNB may generally connect through the X2 link to another eNB such as a macro eNB through its base station controller (BSC) functionality and/or connect via an S1 interface to an MME/Service Gateway. Thus, LP eNB may be implemented with a picocell eNB since it may be coupled to a macro eNB 104a via an X2 interface. Picocell eNBs or other LP eNBs LP eNB 104b may incorporate some or all functionality of a macro eNB LP eNB 104a. In some cases, this may be referred to as an access point base station or enterprise femtocell.

Normal (wideband) communication over an LTE network may be split up into 10ms radio frames, each of which may contain ten 1ms subframes. Each subframe of the frame, in turn, may contain two slots of 0.5ms. Each subframe may be used for uplink (UL) communications from the UE 102 to the eNB 104 or downlink (DL) communications from the eNB 104 to the UE. In one embodiment, the eNB 104 may allocate a greater number of DL communications than UL communications in a particular frame. The eNB 104 may schedule transmissions over a variety of frequency bands. Each slot of the subframe may contain 6-7 OFDM symbols, depending on the system used. In one embodiment, each subframe may contain 12 subcarriers. Each FDD subframe may be an uplink subframe or a downlink subframe. Each TDD subframe may be in addition a special subframe that contains uplink and downlink data or control signals and may be disposed immediately after a downlink subframe and immediately before an uplink subframe.

A resource grid may be used for uplink and downlink transmissions between an eNB 104 and a UE 102. The resource grid may be a time-frequency grid, which is the physical resource in the downlink in each slot. The smallest time-frequency unit in a resource grid may be denoted as a resource element (RE). Each column and each row of the resource grid may correspond to one OFDM symbol and one OFDM subcarrier, respectively. The resource grid may contain resource blocks (RBs) that describe the mapping of physical channels to resource elements and physical RBs (PRBs). A PRB may be the smallest unit of resources that can be allocated to a UE. A RB in the LTE system may be 180 kHz wide in frequency and 1 slot long in time. In frequency, RBs may be either 12 x 15 kHz subcarriers or 24 x 7.5 kHz subcarriers wide, dependent on the system bandwidth. The bandwidth of a LTE channel may range from 1.4MHz to 20MHz. In Frequency Division Duplexing (FDD) systems, both the uplink and downlink frames may be 10ms and frequency (full-duplex) or time (half-duplex) separated. In Time Division Duplexing (TDD) systems, the uplink and downlink subframes may be transmitted on the same frequency and are multiplexed in the time domain. The duration of the resource grid 400 in the time domain corresponds to one subframe or two resource blocks. Each resource grid may comprise 12 (subcarriers) * 14 (symbols) =168 resource elements.

There may be several different physical downlink channels that are conveyed using such resource blocks, including the physical downlink control channel (PDCCH) and the physical downlink shared channel (PDSCH). Each downlink subframe may be partitioned into the PDCCH and the PDSCH. The PDCCH may normally occupy the first two symbols of each subframe and carry, among other things, information about the transport format and resource allocations related to the PDSCH channel, as well as H-ARQ information related to the uplink shared channel. The PDSCH may carry user data and higher layer signaling to a UE and occupy the remainder of the subframe. Typically, downlink scheduling (assigning control and shared channel resource blocks to UEs within a cell) may be performed at the eNB based on channel quality information provided from the UEs to the eNB, and then the downlink resource assignment information may be sent to each UE on the PDCCH used for (assigned to) the UE. The PDCCH may contain downlink control information (DCI) in one of a number of formats that indicate to the UE how to find and decode data, transmitted on PDSCH in the same subframe, from the resource grid. The DCI format may provide details such as number of resource blocks, resource allocation type, modulation scheme, transport block, redundancy version, coding rate etc. Each DCI format may have a cyclic redundancy code (CRC) and be scrambled with a Radio Network Temporary Identifier (RNTI) that identifies the target UE for which the PDSCH is intended. Use of the UE-specific RNTI may limit decoding of the DCI format (and hence the corresponding PDSCH) to only the intended UE.

The EPC 120 may be in communication with various servers, such as an application server, directly or through the internet. The application server can be configured to support one or more communication services such as Voice-over-Internet Protocol (VoIP) sessions, Push-to-Talk (PTT) sessions, group communication sessions, and various social networking services for UEs that can connect to the application server. The application server can also be configured as a cloud services provider.

The eNB 104 may be connected via the control plane to the MME 122 through the S1 interface 115. The MME 122 may, in turn, be connected to a Serving Mobile Location Center (SMLC) (or Evolved SMLC (E-SMLC)) 134 of a location server 130. The eNB 104 may be also connected via the user plane to the Secured User Plane (SUPL) Location Platform (SLP) 132 of the location server 130 through the PDN GW 126. The SLP 132 of the location server 130 may provide information to the UE 102 through the PDN GW 126.

In general, to obtain UE position, the MME 122 may receive a request for a location service associated with a particular target UE from another entity or may itself initiate the location service on behalf of a particular target UE. The other entity may be a UE, an eNB or a SMLC. The MME 122 may initiate positional determination when for, example an E911 call is made from the UE 102. The MME 122 may send a location services request to the SMLC 134. The SMLC 134 may, in response, transmit assistance data to the UE 102 to assist with UE-based/assisted positioning. The SMLC 134 may receive the corresponding measurement data from the UE 102 or eNB 104 serving the UE 102, determine a positional estimate for the UE 102 and return the positional estimate and/or an indication of assistance data transferred to the UE 102 to the MME 122. If the location service is requested, rather than being initiated by the MME 122, the MME 122 may return the location service result to the requesting entity as well as other network entities that may desire the UE location.

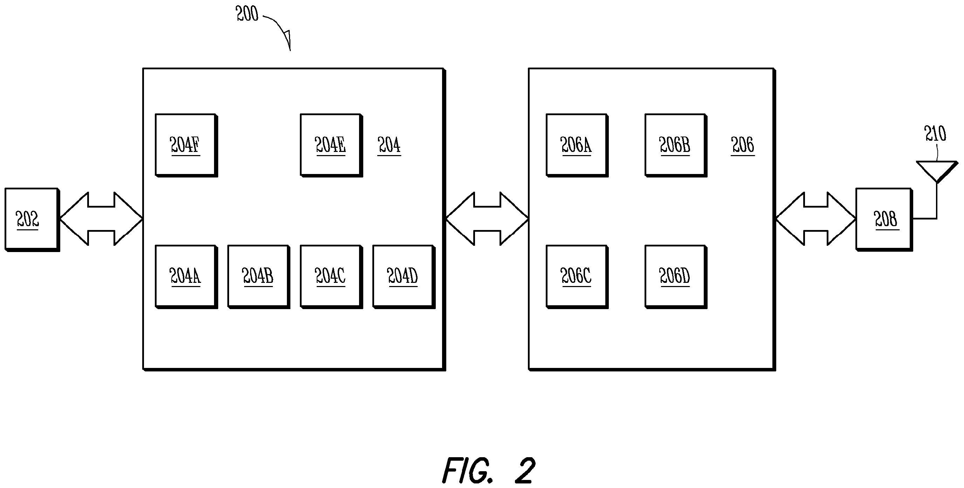

Embodiments described herein may be implemented into a system using any suitably configured hardware and/or software. FIG. 2 illustrates components of a UE in accordance with some embodiments. At least some of the components shown may be used in the UE 102 (or eNB 104) shown in FIG. 1. The UE 200 and other components may be configured to use the synchronization signals as described herein. The UE 200 may be one of the UEs 102 shown in FIG. 1 and may be a stationary, non-mobile device or may be a mobile device. In some embodiments, the UE 200 may include application circuitry 202, baseband circuitry 204, Radio Frequency (RF) circuitry 206, front-end module (FEM) circuitry 208 and one or more antennas 210, coupled together at least as shown. At least some of the baseband circuitry 204, RF circuitry 206, and FEM circuitry 208 may form a transceiver. In some embodiments, other network elements, such as the eNB may contain some or all of the components shown in FIG. 2. Other of the network elements, such as the MME, may contain an interface, such as the S1 interface, to communicate with the eNB over a wired connection regarding the UE.

The application or processing circuitry 202 may include one or more application processors. For example, the application circuitry 202 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 204 may include circuitry such as, but not limited to, one or more single-core or multi-core processors. The baseband circuitry 204 may include one or more baseband processors and/or control logic to process baseband signals received from a receive signal path of the RF circuitry 206 and to generate baseband signals for a transmit signal path of the RF circuitry 206. Baseband processing circuity 204 may interface with the application circuitry 202 for generation and processing of the baseband signals and for controlling operations of the RF circuitry 206. For example, in some embodiments, the baseband circuitry 204 may include a second generation (2G) baseband processor 204a, third generation (3G) baseband processor 204b, fourth generation (4G) baseband processor 204c, and/or other baseband processor(s) 204d for other existing generations, generations in development or to be developed in the future (e.g., fifth generation (5G), 5G, etc.). The baseband circuitry 204 (e.g., one or more of baseband processors 204a-d) may handle various radio control functions that enable communication with one or more radio networks via the RF circuitry 206. The radio control functions may include, but are not limited to, signal modulation/demodulation, encoding/decoding, radio frequency shifting, etc. In some embodiments, modulation/demodulation circuitry of the baseband circuitry 204 may include FFT, precoding, and/or constellation mapping/demapping functionality. In some embodiments, encoding/decoding circuitry of the baseband circuitry 204 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 204 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 204e of the baseband circuitry 204 may be configured to run elements of the protocol stack for signaling of the PHY, MAC, RLC, PDCP and/or RRC layers. In some embodiments, the baseband circuitry may include one or more audio digital signal processor(s) (DSP) 204f. The audio DSP(s) 204f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 204 and the application circuitry 202 may be implemented together such as, for example, on a system on a chip (SOC).

In some embodiments, the baseband circuitry 204 may provide for communication compatible with one or more radio technologies. For example, in some embodiments, the baseband circuitry 204 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 204 is configured to support radio communications of more than one wireless protocol may be referred to as multi-mode baseband circuitry. In some embodiments, the device can be configured to operate in accordance with communication standards or other protocols or standards, including Institute of Electrical and Electronic Engineers (IEEE) 802.16 wireless technology (WiMax), IEEE 802.11 wireless technology (WiFi) including IEEE 802.11 ad, which operates in the 60 GHz millimeter wave spectrum, various other wireless technologies such as global system for mobile communications (GSM), enhanced data rates for GSM evolution (EDGE), GSM EDGE radio access network (GERAN), universal mobile telecommunications system (UMTS), UMTS terrestrial radio access network (UTRAN), or other 2G, 3G, 4G, 5G, etc. technologies either already developed or to be developed.

RF circuitry 206 may enable communication with wireless networks using modulated electromagnetic radiation through a non-solid medium. In various embodiments, the RF circuitry 206 may include switches, filters, amplifiers, etc. to facilitate the communication with the wireless network. RF circuitry 206 may include a receive signal path which may include circuitry to down-convert RF signals received from the FEM circuitry 208 and provide baseband signals to the baseband circuitry 204. RF circuitry 206 may also include a transmit signal path which may include circuitry to up-convert baseband signals provided by the baseband circuitry 204 and provide RF output signals to the FEM circuitry 208 for transmission.

In some embodiments, the RF circuitry 206 may include a receive signal path and a transmit signal path. The receive signal path of the RF circuitry 206 may include mixer circuitry 206a, amplifier circuitry 206b and filter circuitry 206c. The transmit signal path of the RF circuitry 206 may include filter circuitry 206c and mixer circuitry 206a. RF circuitry 206 may also include synthesizer circuitry 206d for synthesizing a frequency for use by the mixer circuitry 206a of the receive signal path and the transmit signal path. In some embodiments, the mixer circuitry 206a of the receive signal path may be configured to down-convert RF signals received from the FEM circuitry 208 based on the synthesized frequency provided by synthesizer circuitry 206d. The amplifier circuitry 206b may be configured to amplify the down-converted signals and the filter circuitry 206c may be a low-pass filter (LPF) or band-pass filter (BPF) configured to remove unwanted signals from the down-converted signals to generate output baseband signals. Output baseband signals may be provided to the baseband circuitry 204 for further processing. In some embodiments, the output baseband signals may be zero-frequency baseband signals, although this is not a requirement. In some embodiments, mixer circuitry 206a of the receive signal path may comprise passive mixers, although the scope of the embodiments is not limited in this respect.

In some embodiments, the mixer circuitry 206a of the transmit signal path may be configured to up-convert input baseband signals based on the synthesized frequency provided by the synthesizer circuitry 206d to generate RF output signals for the FEM circuitry 208. The baseband signals may be provided by the baseband circuitry 204 and may be filtered by filter circuitry 206c. The filter circuitry 206c may include a low-pass filter (LPF), although the scope of the embodiments is not limited in this respect.

In some embodiments, the mixer circuitry 206a of the receive signal path and the mixer circuitry 206a of the transmit signal path may include two or more mixers and may be arranged for quadrature downconversion and/or upconversion respectively. In some embodiments, the mixer circuitry 206a of the receive signal path and the mixer circuitry 206a of the transmit signal path may include two or more mixers and may be arranged for image rejection (e.g., Hartley image rejection). In some embodiments, the mixer circuitry 206a of the receive signal path and the mixer circuitry 206a may be arranged for direct downconversion and/or direct upconversion, respectively. In some embodiments, the mixer circuitry 206a of the receive signal path and the mixer circuitry 206a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 206 may include analog-to-digital converter (ADC) and digital-to-analog converter (DAC) circuitry and the baseband circuitry 204 may include a digital baseband interface to communicate with the RF circuitry 206.

In some dual-mode embodiments, a separate radio IC circuitry may be provided for processing signals for each spectrum, although the scope of the embodiments is not limited in this respect.

In some embodiments, the synthesizer circuitry 206d may be a fractional-N synthesizer or a fractional N/N+1 synthesizer, although the scope of the embodiments is not limited in this respect as other types of frequency synthesizers may be suitable. For example, synthesizer circuitry 206d may be a delta-sigma synthesizer, a frequency multiplier, or a synthesizer comprising a phase-locked loop with a frequency divider.

The synthesizer circuitry 206d may be configured to synthesize an output frequency for use by the mixer circuitry 206a of the RF circuitry 206 based on a frequency input and a divider control input. In some embodiments, the synthesizer circuitry 206d may be a fractional N/N+1 synthesizer.

In some embodiments, frequency input may be provided by a voltage controlled oscillator (VCO), although that is not a requirement. Divider control input may be provided by either the baseband circuitry 204 or the applications processor 202 depending on the desired output frequency. In some embodiments, a divider control input (e.g., N) may be determined from a look-up table based on a channel indicated by the applications processor 202.

Synthesizer circuitry 206d of the RF circuitry 206 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 206d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency ($f_{LO}$). In some embodiments, the RF circuitry 206 may include an IQ/polar converter.

FEM circuitry 208 may include a receive signal path which may include circuitry configured to operate on RF signals received from one or more antennas 210, amplify the received signals and provide the amplified versions of the received signals to the RF circuitry 206 for further processing. FEM circuitry 208 may also include a transmit signal path which may include circuitry configured to amplify signals for transmission provided by the RF circuitry 206 for transmission by one or more of the one or more antennas 210.

In some embodiments, the FEM circuitry 208 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 206). The transmit signal path of the FEM circuitry 208 may include a power amplifier (PA) to amplify input RF signals (e.g., provided by RF circuitry 206), and one or more filters to generate RF signals for subsequent transmission (e.g., by one or more of the one or more antennas 210.

In some embodiments, the UE 200 may include additional elements such as, for example, memory/storage, display, camera, sensor, and/or input/output (I/O) interface as described in more detail below. In some embodiments, the UE 200 described herein may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), or other device that may receive and/or transmit information wirelessly. In some embodiments, the UE 200 may include one or more user interfaces designed to enable user interaction with the system and/or peripheral component interfaces designed to enable peripheral component interaction with the system. For example, the UE 200 may include one or more of a keyboard, a keypad, a touchpad, a display, a sensor, a non-volatile memory port, a universal serial bus (USB) port, an audio jack, a power supply interface, one or more antennas, a graphics processor, an application processor, a speaker, a microphone, and other I/O components. The display may be an LCD or LED screen including a touch screen. The sensor may include a gyro sensor, an accelerometer, a proximity sensor, an ambient light sensor, and a positioning unit. The positioning unit may communicate with components of a positioning network, e.g., a global positioning system (GPS) satellite.

The antennas 210 may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas 210 may be effectively separated to take advantage of spatial diversity and the different channel characteristics that may result.

Although the UE 200 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

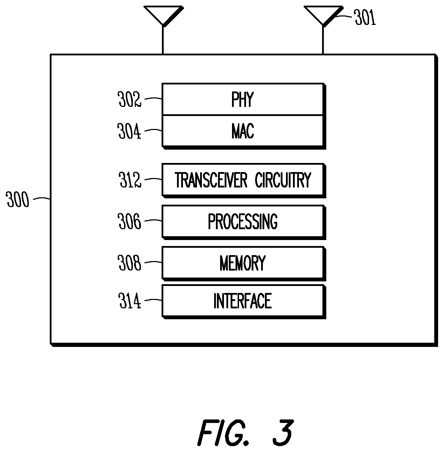

FIG. 3 is a block diagram of a communication device in accordance with some embodiments. The device may be a UE or eNB, for example, such as the UE 102 or eNB 104 shown in FIG. 1 that may be configured to track the UE as described herein. The physical layer circuitry 302 may perform various encoding and decoding functions that may include formation of baseband signals for transmission and decoding of received signals. The communication device 300 may also include medium access control layer (MAC) circuitry 304 for controlling access to the wireless medium. The communication device 300 may also include processing circuitry 306, such as one or more single-core or multi-core processors, and memory 308 arranged to perform the operations described herein. The physical layer circuitry 302, MAC circuitry 304 and processing circuitry 306 may handle various radio control functions that enable communication with one or more radio networks compatible with one or more radio technologies. The radio control functions may include signal modulation, encoding, decoding, radio frequency shifting, etc. For example, similar to the device shown in FIG. 2, in some embodiments, communication may be enabled with one or more of a WMAN, a WLAN, and a WPAN. In some embodiments, the communication device 300 can be configured to operate in accordance with 3GPP standards or other protocols or standards, including WiMax, WiFi, WiGig, GSM, EDGE, GERAN, UMTS, UTRAN, or other 3G, 3G, 4G, 5G, etc. technologies either already developed or to be developed. The communication device 300 may include transceiver circuitry 312 to enable communication with other external devices wirelessly and interfaces 314 to enable wired communication with other external devices. As another example, the transceiver circuitry 312 may perform various transmission and reception functions such as conversion of signals between a baseband range and a Radio Frequency (RF) range.

The antennas 301 may comprise one or more directional or omnidirectional antennas, including, for example, dipole antennas, monopole antennas, patch antennas, loop antennas, microstrip antennas or other types of antennas suitable for transmission of RF signals. In some MIMO embodiments, the antennas 301 may be effectively separated to take advantage of spatial diversity and the different channel characteristics that may result.

Although the communication device 300 is illustrated as having several separate functional elements, one or more of the functional elements may be combined and may be implemented by combinations of software-configured elements, such as processing elements including DSPs, and/or other hardware elements. For example, some elements may comprise one or more microprocessors, DSPs, FPGAs, ASICs, RFICs and combinations of various hardware and logic circuitry for performing at least the functions described herein. In some embodiments, the functional elements may refer to one or more processes operating on one or more processing elements. Embodiments may be implemented in one or a combination of hardware, firmware and software. Embodiments may also be implemented as instructions stored on a computer-readable storage device, which may be read and executed by at least one processor to perform the operations described herein.

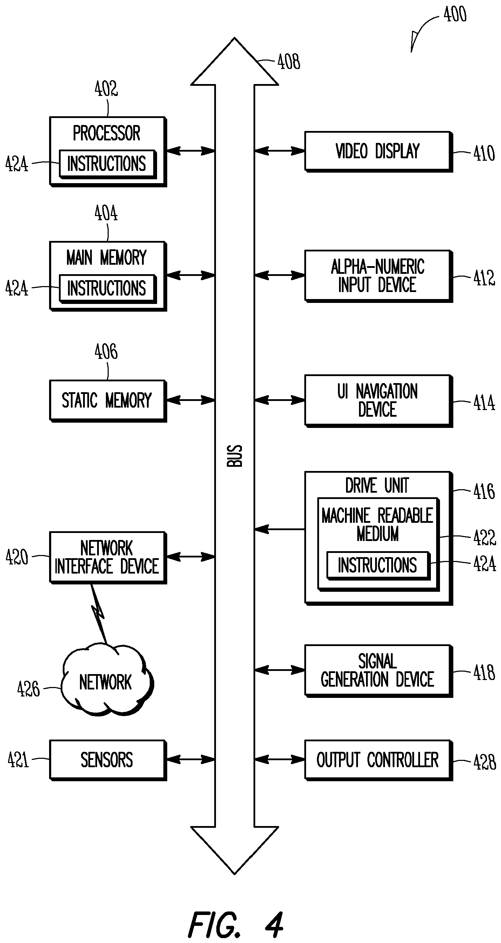

FIG. 4 illustrates another block diagram of a communication device in accordance with some embodiments. In alternative embodiments, the communication device 400 may operate as a standalone device or may be connected (e.g., networked) to other communication devices. In a networked deployment, the communication device 400 may operate in the capacity of a server communication device, a client communication device, or both in server-client network environments. In an example, the communication device 400 may act as a peer communication device in peer-to-peer (P2P) (or other distributed) network environment. The communication device 400 may be a UE, eNB, PC, a tablet PC, a STB, a PDA, a mobile telephone, a smart phone, a web appliance, a network router, switch or bridge, or any communication device capable of executing instructions (sequential or otherwise) that specify actions to be taken by that communication device. Further, while only a single communication device is illustrated, the term "communication device" shall also be taken to include any collection of communication devices that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a communication device readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Communication device (e.g., computer system) 400 may include a hardware processor 402 (e.g., a central processing unit (CPU), a graphics processing unit (GPU), a hardware processor core, or any combination thereof), a main memory 404 and a static memory 406, some or all of which may communicate with each other via an interlink (e.g., bus) 408. The communication device 400 may further include a display unit 410, an alphanumeric input device 412 (e.g., a keyboard), and a user interface (UI) navigation device 414 (e.g., a mouse). In an example, the display unit 410, input device 412 and UI navigation device 414 may be a touch screen display. The communication device 400 may additionally include a storage device (e.g., drive unit) 416, a signal generation device 418 (e.g., a speaker), a network interface device 420, and one or more sensors 421, such as a global positioning system (GPS) sensor, compass, accelerometer, or other sensor. The communication device 400 may include an output controller 428, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 416 may include a communication device readable medium 422 on which is stored one or more sets of data structures or instructions 424 (e.g., software) embodying or utilized by any one or more of the techniques or functions described herein. The instructions 424 may also reside, completely or at least partially, within the main memory 404, within static memory 406, or within the hardware processor 402 during execution thereof by the communication device 400. In an example, one or any combination of the hardware processor 402, the main memory 404, the static memory 406, or the storage device 416 may constitute communication device readable media.

While the communication device readable medium 422 is illustrated as a single medium, the term "communication device readable medium" may include a single medium or multiple media (e.g., a centralized or distributed database, and/or associated caches and servers) configured to store the one or more instructions 424.

The term "communication device readable medium" may include any medium that is capable of storing, encoding, or carrying instructions for execution by the communication device 400 and that cause the communication device 400 to perform any one or more of the techniques of the present disclosure, or that is capable of storing, encoding or carrying data structures used by or associated with such instructions. Non-limiting communication device readable medium examples may include solid-state memories, and optical and magnetic media. Specific examples of communication device readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, communication device readable media may include non-transitory communication device readable media. In some examples, communication device readable media may include communication device readable media that is not a transitory propagating signal.

The instructions 424 may further be transmitted or received over a communications network 426 using a transmission medium via the network interface device 420 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as WiFi®, IEEE 802.16 family of standards known as WiMax®), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 420 may include one or more physical jacks (e.g., Ethernet, coaxial, or phone jacks) or one or more antennas to connect to the communications network 426. In an example, the network interface device 420 may include a plurality of antennas to wirelessly communicate using at least one of single-input multiple-output (SIMO), MIMO, or multiple-input single-output (MISO) techniques. In some examples, the network interface device 420 may wirelessly communicate using Multiple User MIMO techniques. The term "transmission medium" shall be taken to include any intangible medium that is capable of storing, encoding or carrying instructions for execution by the communication device 400, and includes digital or analog communications signals or other intangible medium to facilitate communication of such software.

As above, the devices shown in FIGS. 1-4 may communicate over various bands (e.g., LTE or unlicensed) and use different radio access technologies. Independent of the technology used, even traveling at the speed of light, transmissions between the UE and the eNB take a not-insubstantial amount of time. The signals from different UEs are to reach the eNB essentially simultaneously, with a delay spread less than the cyclic prefix duration to prevent the risk of inter-symbol interference between the signals. To enable this timing, different UEs may start transmitting uplink communications at different times depending on the distance from the eNB (increasingly earlier with increasing distance from the eNB). Because the uplink transmission time from a particular UE may be based on the downlink arrival time, a timing advance (TA) may be used to compensate for the round-trip travel time between the eNB and the UE. The TA is always positive and may be close to an absolute desired value, but does not have to be absolutely accurate, as the cyclic prefix may be able to handle any residual errors.

In general, the physical layer of both the UE and eNB may perform measurements that are used to trigger or perform various functions. For example, to establish the TA during RRC Connection with the eNB (e.g., initially entering the cell served by the eNB or after exiting a discontinuous reception/idle mode), the UE may transmit a Physical Random Access Channel (PRACH) signal to the eNB. The eNB may measure the TA based on the arrival time of the PRACH signal and send a TA command in a Random Access Response (RAR). The RAR may have an 11-bit MAC payload that indicates a TA in the range of 0-1282 (corresponding to 0 - 2/3 of a subframe = about 100 km).

Once the UE is in the RRC Connected mode, the eNB may continuously measure timing of an uplink signal from the UE (described in more detail below), estimate the TA and send a TA Command MAC Control Element to the UE if correction is required. The eNB may use an 8 bit MAC control element (LCID = 11101) having a 6 bit index value (0-63) in the TA command to signal the UE to adjust the TA. In some embodiments, the eNB may continuously measure timing of an uplink signal from each UE served by the UE and adjust the uplink transmission timing by sending the value of the TA to the respective UE. The uplink data may be a PUSCH, PUCCH, or Sounding Reference Signal (SRS), for example. The eNB may trigger the TA with a MAC message for adjustment of the TA.

The eNB may provide the UE with a configurable timer that indicates the length of time for the UE to apply a TA value. The value of the timer may either be UE-specific and managed through dedicated signaling between the UE and the eNB, or may be cell-specific and indicated in system information block 2 (SIB2). In either case, the timer may be restarted whenever a new TA is received by the UE based on the condition when the TA Command is received. If the UE has not received a TA Command until after the timer (whether UE- or cell-specific) has expired, the UE may assume that uplink synchronization has been lost and, prior to any uplink transmission, may perform an explicit timing re-alignment phase using the random access procedure to restore the uplink time alignment. In particular, the UE may flush all Hybrid Automatic Repeat Request (HARQ) buffers, and release periodic Channel Quality Indication (CQI), Scheduling Request and SRS PUCCH resources, and clear configured downlink assignments and uplink grants. The UE may avoid uplink transmissions after the timer has expired except a Random Access Preamble transmission.

Turning to specifics of the timing, $N_{TA}$ is the timing offset between uplink and downlink radio frames at the UE, expressed in units of $T_s$ where $T_s$ = about 33 ns ($T_s$ = 1/(2048x15000) sec = 1/30720000 sec). A TA of one $T_s$ is equivalent to a distance of 4.89 meters. The relative TA, which may be updated by the eNB and sent to the UE, may be given by $N_{TA,new} = N_{TA,old} + (T_A - 31) \times 16$ where $N_{TA,old}$ is the current timing adjustment and $N_{TA,new}$ is the current timing adjustment and the uplink transmission may be advanced or delayed depending on whether the value (TA-31) is positive or negative. The signaled granularity in the TA command is 16 $T_s$ so that the TA can be represented as $N_{TA}$ = 16 TA (granularity 0.52μm = 78m). For example, TA = 0 leads to $N_{TA}$ = 0, TA = 1 leads to $N_{TA}$ = 16 = about 78m, TA = 1282 leads to $N_{TA}$ = about 100km. The UE adjusts the timing of the uplink transmission at subframe n+6 for a TA command received in subframe n. TA can be represented as:

$$TA = (N_{TA} + N_{TAoffset})\, T_s$$

$N_{TAoffset}$ is zero in FDD mode, and is 624 in TDD mode. This may be used when determining not only the TA, but also the UE position. The $N_{TA}$ offset in TDD mode, 624$T_s$, may be considered in the ECID calculation at the E-SMLC. The ECID calculation may use an Rx-Tx timing difference report mapping table. To permit closer distances to be more accurately determined, the mapping table may have an unevenly distributed granularity. In some embodiments, cell coverage of up to 20km may employ finer Rx-Tx timing difference reporting and better E-CID performance. In some embodiments, this may be adjusted so that several steps in granularity are present in the Rx-Tx timing difference report mapping table that is used to map the Rx-Tx timing to the $N_{TA}$.

According to the invention, the Rx-Tx timing difference report mapping table may be shared by both FDD and TDD modes. This mapping table is shown in Table 1. The reporting range of the UE Rx-Tx time difference value may run from 0-4095 and be defined for a UE Rx-Tx time difference from 0 to 20472$T_s$ (TA=1282). The resolution for a UE Rx-Tx time difference less than 4096$T_s$ (about 20km) is 2$T_s$ (about 9.76m) and 8$T_s$ for a UE Rx-Tx time difference equal to or greater than 4096TS. This translates, as shown in Table 1, to a 2$T_s$ resolution for reported values of 0-2047 (0-(2n -1)) and to an 8$T_s$ resolution for reported values of 2048-4095 (2n-212). The UE Rx-Tx time difference (measured quantity value) may be the $N_{TA}$ value.

Table 1

| Reported value | Measured quantity value | Unit |
|---|---|---|
| RX-TX_TIME_DIFFERENCE_0000 | $T_{UE\ Rx\text{-}Tx} < 2$ | $T_s$ |
| RX-TX_TIME_DIFFERENCE_0001 | $2 \le T_{UE\ Rx\text{-}Tx} < 4$ | $T_s$ |
| RX-TX_TIME_DIFFERENCE_0002 | $4 \le T_{UE\ Rx\text{-}Tx} < 6$ | $T_s$ |
| ... | ... | ... |
| RX-TX_TIME_DIFFERENCE_2046 | $4092 \le T_{UE\ Rx\text{-}Tx} < 4094$ | $T_s$ |
| RX-TX_TIME_DIFFERENCE_2047 | $4094 \le T_{UE\ Rx\text{-}Tx} < 4096$ | $T_s$ |
| RX-TX_TIME_DIFFERENCE_2048 | $4096 \le T_{UE\ Rx\text{-}Tx} < 4104$ | $T_s$ |
| RX-TX_TIME_DIFFERENCE_2049 | $4104 \le T_{UE\ Rx\text{-}Tx} < 4112$ | $T_s$ |
|  | ... | ... |
| RX-TX_TIME_DIFFERENCE_4093 | $20456 \le T_{UE\ Rx\text{-}Tx} < 20464$ | $T_s$ |
| RX-TX_TIME_DIFFERENCE_4094 | $20464 \le T_{UE\ Rx\text{-}Tx} < 20472$ | $T_s$ |
| RX-TX_TIME_DIFFERENCE_4095 | $20472 \le T_{UE\ Rx\text{-}Tx}$ | $T_s$ |

However, as above, a TA offset may be present in TDD UE TA reporting, e.g., due to the time to switch between transmit and receive chains. The impact of the offset is that a TDD UE using Table 1 may avoid TA reporting to the eNB when the measured Rx-Tx timing difference is less than 624Ts. Thus, values of 0-312 may not be reported by the TDD UE. This may result in a different maximum cell coverage and ECID performances between FDD and TDD mode system. In particular, a TDD system may be able to compensate for the offset time, resulting in a smaller geographical area than a FDD system being able to be indicated as fewer values may be reported by the TDD UE and thus be available to the ECID for TDD systems.

As a result, a new Rx-Tx time difference mapping table may be defined for TDD UEs while the Rx-Tx time difference mapping table for FDD UEs (Table 1) may still be used. This may change the reporting for TDD UEs from that above. Thus, the UE and eNB may use a multi-table system in which multiple tables are stored and used to convert the measured Rx-Tx time difference and reported Rx-Tx time difference value, the table being used dependent on whether the UE is a TDD or FDD UE. In addition, an ECID mechanism may be defined for the new Rx-Tx time difference report mapping for the TDD system. The Rx-Tx time difference mapping and ECID mechanism for TDD systems may inherently take the TA offset into consideration. This may permit TDD systems to have similar coverage as FDD systems and may improve ECID performance of TDD systems.

In particular, the TDD UE may exclude use of the TA offset from the report transmitted to the eNB. However, the E-SMLC may incorporate the TA offset; that is at the E-SMLC, a predetermined TA offset may instead be considered in the ECID calculation.

The reporting range of the UE Rx-Tx time difference for a TDD UE may be defined from 624 to $21096T_s$ with $2T_s$ resolution for a UE Rx-Tx time difference less than $4720T_s$ and an $8T_s$ resolution for a UE Rx - Tx time difference equal to or greater than $4720T_s$. Thus, a UE Rx-Tx time difference value 0 is defined to be up to $626T_s$. This means that the TDD UE may use the complete range of Rx-Tx time difference values, the same range as a FDD UE, instead of avoiding the use of Rx-Tx time difference values 0-312 when the same table (Table 1) is used for both TDD and FDD UEs. The mapping of the measured quantity is defined in Table 2 below.

Table 2

| Reported value | Measured quantity value | Unit |
|---|---|---|
| RX-TX_TIME_DIFFERENCE_0000 | $T_{UE\ Rx\text{-}Tx} < 626$ | $T_s$ |
| RX-TX_TIME_DIFFERENCE_0001) | $626 \le T_{UE\ Rx\text{-}Tx} < 628$ | $T_s$ |
| RX-TX_TIME_DIFFERENCE_0002 | $626 \le T_{UE\ Rx\text{-}Tx} < 630$ | $T_s$ |
| ... | ... | ... |
| RX-TX_TIME_DIFFERENCE_2046 | $4716 \le T_{UE\ Rx\text{-}Tx} < 4718$ | $T_s$ |

(continued)

| Reported value | Measured quantity value | Unit |
|---|---|---|
| RX-TX_TIME_DIFFERENCE_2047 | $4718 \leq T_{UE\ Rx-Tx} < 4720$ | $T_s$ |
| RX-TX_TIME_DIFFERENCE_2048 | $4720 \leq T_{UE\ Rx-Tx} < 4728$ | $T_s$ |
| RX-TX_TIME_DIFFERENCE_2049 | $4728 \leq T_{UE\ Rx-Tx} < 4736$ | $T_s$ |
| ... | ... | ... |
| RX-TX_TIME_DIFFERENCE_4093 | $21080 \leq T_{UE\ Rx-Tx} < 21088$ | $T_s$ |
| RX-TX_TIME_DIFFERENCE_4094 | $21088 \leq T_{UE\ Rx-Tx} < 21096$ | $T_s$ |
| RX-TX_TIME_DIFFERENCE_4095 | $21096 \leq T_{UE\ Rx-Tx}$ | $T_s$ |

After the Rx-Tx time difference value is reported to the eNB, the eNB may determine the appropriate TA offset and send a TA offset adjustment to the UE in a TA command. The use of the offset may thus be moved from the eNB and ECID to the UE. Once the UE receives the TA Command from the eNB, UE may apply the TA offset adjustment. This may permit the UE to have the appropriate timing for reception of uplink at the eNB.

In addition to synchronizing the uplink transmission at the eNB, the report may also be used in determining the UE location. In particular, the Rx-Tx time difference value reported by the UE using Table 1 or Table 2 may be provided to the E-SMLC and may play a role in accurate non-GPS position determination.

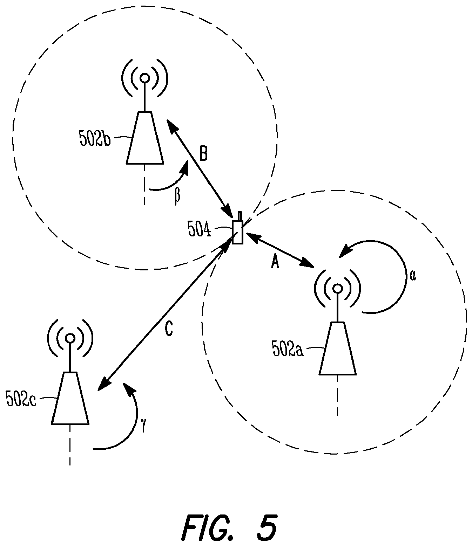

FIG. 5 illustrates Enhanced Cell Identification (ECID) techniques in accordance with some embodiments. The ECID technique may be performed by any of the devices shown in FIGS. 1-4. The ECID technique may estimate the position of the UE 504 as a function of distance from a serving eNB 502a using round trip time between the UE 504 and the serving eNB 502a, as well as the fixed geographical coordinates of the serving eNB 502a and the cell size of the serving eNB 502a. As shown, ECID can be used with a single eNB 502a or with multiple neighboring eNBs 502b, 502c in addition to the serving eNB 502a.

Specifically, in a serving eNB 502a only reporting embodiment, the UE 504 may report to the serving eNB 502a the ID of the serving cell, the measured Rx-Tx time difference and the measured Reference Signal Received Power (RSRP) of the Cell Specific Reference Signals (CRS) from the serving eNB 502a. The eNB 502a may in turn report this information to the E-SMLC. The UE 504 may obtain the cell ID, for example, by paging or from system information transmitted by the serving eNB 502a. Positional accuracy may be limited in this case to a circle (sphere) around the serving eNB 502a. In other embodiments, the TA and/or Round Trip Time (RTT) estimations may be reported instead or in addition to the RSRP.

In a multi-eNB reporting embodiment, the UE 504 may report the same information (shown as A, B, C) as in the single eNB embodiment for all eNBs 502a, 502b, 502c. The UE 504 may thus report the measured Rx-Tx time difference and RSRP from each eNB (both the serving eNB 502a and one or more neighbor eNBs 502b, 502c) as well as the ID to the respective eNB. In some embodiments, the measurements of all of the eNBs 502a, 502b, 502c may be provided to the serving eNB 502a for conveyance to the E-SMLC.

In another embodiment, angle of arrival information ($\alpha$, $\beta$, $\gamma$) from two or more of the eNBs 502a, 502b, 502c may be provided from the serving eNB to the E-SMLC. The angle of arrival may indicate the estimated angle of a UE with respect to a reference direction) The angle of arrival may be measured based on uplink transmissions from the UE and the configuration of the eNB antenna array. The received UE signal between successive antenna elements may be typically phase-shifted by a measurable value. The degree of this phase shift may depend on the angle of arrival, the antenna element spacing, and the carrier frequency. By measuring the phase shift and using eNB characteristics, the angle of arrival can be determined by the eNB. The E-SMLC may estimate the UE position based on the information and knowledge of the positions of the various eNBs.

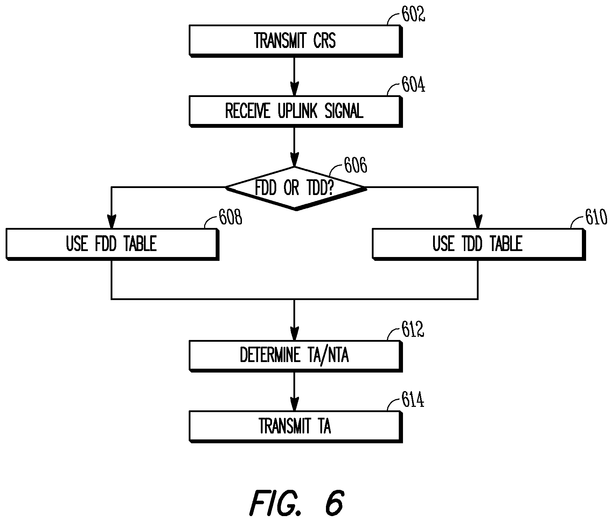

FIG. 6 illustrates a flowchart of a method of location determination in accordance with some embodiments. The method may be performed by any of the devices shown in FIGS. 1-5. Some of the operations shown may be eliminated or combined. The EUTRAN UE providing the report may be either a TDD or FDD UE in the RRC Connected mode, synchronized to the eNB of the primary cell (also referred to herein merely as the PCell) and performing measurements with the appropriate measurement gaps as defined in Clause 8.1.2.1 of 3GPP TS 36.133. In FIG. 6, the UE Rx-Tx time difference is measured from the PCell. Thus, UEs that are entering the RRC Connected state from the RRC Idle state or have transitioned to the PCell, e.g., via handoff, may use a flowchart different from that shown in FIG. 6.

At operation 602, cell specific reference signals (CRS) are transmitted from the PCell. The CRS may be transmitted from one, two or four antenna ports of the PCell. The PCell may ensure that the conditions defined in 3GPP TS 36.101 Clause 7.3 for reference sensitivity are fulfilled. No changes to the uplink transmission timing may be applied during the measurement period. The minimum RSRP for the different bands on which the CRS may be transmitted may range from -127 to -120.5 dBm/15kHz. The accuracy of the measurement may be limited to $\pm 20 T_s$, Ês/Iot of $\geq$3dB, Downlink transmission bandwidth of Pcell of $\geq$1.4MHz, and a minimum Io range (average Io/RE over all REs in a symbol) of -121 to -114.5 dBm/15kHz and maximum Io of -50 dBm/$BW_{channel}$.

At operation 604, the PCell may receive an uplink signal from the UE. The uplink signal may include the Rx-Tx measurement value determined by the UE from a measurement of the Rx-Tx time difference of the CRS. The uplink signal may further include other measurement values of the CRS, such as the RSRP, RSRQ of the CRS. The Rx-Tx time difference value may vary from 0-4096 independent of whether the UE is operating as a TDD or FDD UE. Thus, unlike other cells that only use Table 1 so that the reporting range of the TDD UE Rx-Tx time difference value is limited to values of 313-4095, thereby limiting the useful TA and position range, the Rx-Tx time difference value reported by the TDD UE and TA/position range in the PCell range may extend over all available reporting values and the full range.

At operation 606, the PCell may determine whether the UE is a TDD UE or FDD UE. In some embodiments, the PCell may serve only one type (TDD or FDD) of UEs. In some embodiments, the PCell may switch between FDD and TDD modes. In some embodiments, the PCell may be able to serve both FDD and TDD UEs simultaneously. In this case, the PCell may have different geographic sectors or resource blocks, for example, dedicated to one of the modes.

At operations 608 and 610, having determined the type of UE, the PCell may apply the appropriate table indicated by Table 1 and 2 for translation of the reported Rx-Tx time difference to a measured time in $T_s$. The measured quantity value for a FDD UE may extend to 20472 $T_s$ for a reported Rx-Tx time difference of 4095 while the measured quantity value for a TDD UE may extend to 21096 (20472+624) $T_s$ for a reported Rx-Tx time difference of 4095. The UE Rx-Tx time difference may equal the downlink propagation delay + the UE processing delay + the UL propagation delay.

At operation 612, after having determined the measured quantity value from the appropriate table, the PCell may determine the $N_{TA}$ and the TA. As above, the $N_{TA}$ may be the measured quantity value and the TA as the $N_{TA}/16$ for a FDD UE. The $N_{TA}$ may be the measured quantity value - the offset (624) and the TA as the $N_{TA}/16$ for a TDD UE. The TA may be a type 1 TA = (eNB Rx-Tx time difference) + (UE Rx-Tx time difference), where the eNB Rx-Tx time difference corresponds to the same UE that reports the UE Rx-Tx time difference, or a type 2 TA = (eNB Rx-Tx time difference), where the eNB RX-TX time difference corresponds to a received uplink radio frame containing a PRACH from the UE. The eNB Rx-Tx time difference may be defined as $Te_{NB-RX} - T_{eNB-TX}$, where $T_{eNB-RX}$ is the eNB received timing of uplink radio frame #i, defined by a first detected path in time and the reference point for $T_{eNB-RX}$ is the Rx antenna connector, and $T_{eNB-TX}$ is the eNB transmit timing of downlink radio frame #i, where the reference point for $T_{eNB-TX}$ is the Tx antenna connector. The UE Rx-Tx time difference may be defined as $T_{UE-RX} - T_{UE-TX}$, where $T_{UE-RX}$ is the UE received timing of downlink radio frame #i from the serving cell (PCell), defined by a first detected path in time, $T_{UE-TX}$ is the UE transmit timing of uplink radio frame #i, and the reference point for the UE Rx-Tx time difference measurement is the UE antenna connector.

At operation 614, the PCell may transmit a TA Command MAC Control Element to the UE. The TA Command MAC Control Element may be transmitted, for example, at every measurement, only when an adjustment to the TA is to be made by the UE and the UE is to update the timing of transmissions to the PCell, or prior to the TA timer expiring, even if no TA adjustment is to occur. The PCell may also transmit the TA to the SMLC for the SMLC to estimate the distance of the UE from the PCell via ECID. The SMLC may take into account the predetermined offset (634$T_s$) in performing the ECID calculations. As the Rx-Tx time difference for both TDD and FDD UEs may be able to take the same values, the TA and thus distance able to be determined may be the same for both UEs.

The UE may adjust the uplink transmission timing at subframe n+6 for a TA command received in subframe n with a relative accuracy better than or equal to $\pm 4$ $T_S$ to the signaled TA value compared to the timing of a preceding uplink transmission. The TA command may be expressed, as above, in multiples of 16$T_S$ and is relative to the current uplink timing. The UE may have a TA timer to control how long the UE is considered uplink time aligned. When the TA Command MAC control element is received, the UE may apply the TA Command and start or restart TA timer. When the TA Command is received in a Random Access Response message, if the Random Access Preamble was not selected by UE MAC, the UE may apply the TA Command and starts or restarts the TA timer, or if the TA timer is not running, the UE may apply the TA Command and start the TA timer and if the contention resolution is considered not successful, the UE may stop the TA timer. In some circumstances, the UE may ignore the received TA Command. When the TA timer expires the UE may flush all HARQ buffers, notify the PCell via RRC signaling to release PUCCH/SRS resources and clear any configured downlink assignments and uplink grants.

The TA Command MAC control element may be identified by the UE via a MAC PDU subheader with a LCID value = 11101 (Timing Advance Command). The TA Command MAC control element may have a fixed size and contain a single octet with the first two bits reserved (set to 0) and the last 6 bits indicating the index value TA (0, 1, 2... 63) used to control the amount of timing adjustment.

The SMLC may also obtain TA information from one or more SCells serving the UE for a more accurate estimate of the distance from the PCell and SCells and thus the location of the UE. In this case, the UE may have already synchronized to the PCell and may synchronize to the SCell. Synchronization of the UE to the SCell may be triggered by the PCell requesting a RACH on the SCell sent by PDCCH signaling from the PCell. For carrier aggregation, carriers that use the same TA may be grouped in a timing advance group (TAG); a primary TAG (pTAG) containing the PCell and a secondary TAG (sTAG) containing only one or more SCells. There may be one timing reference cell (the PCell for the pTAG) and one time alignment timer (TAT) per TAG, and each TAT may be configured with a different value.

Although an embodiment has been described with reference to specific example embodiments, it will be evident that various modifications and changes may be made to these embodiments without departing from the scope of the present claims. Accordingly, the specification and drawings are to be regarded in an illustrative rather than a restrictive sense. The accompanying drawings that form a part hereof show, by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of claims. This Detailed Description, therefore, is not to be taken in a limiting sense, and the scope of various embodiments is defined only by the appended claims.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, UE, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment.

## Claims

1.  An apparatus of user equipment, UE, (102, 200) the apparatus comprising:

    a memory; and
    processing circuitry in communication with the memory and arranged to:

    measure a reception, Rx,-transmission, Tx, time difference of a cell specific reference signal from a Primary Cell, PCell, of an evolved NodeB, eNB, (104) the Rx-Tx time difference comprising a time difference between a received timing of a downlink radio frame from the PCell, defined by a first detected path in time, and a transmit timing of an uplink radio frame, the Rx-Tx time difference measured at an antenna connector of the UE (102, 200);

    send, from the processing circuitry for transmission to the eNB, a report comprising the Rx-Tx time difference value; and

    after transmission of the report, decode a Timing Advance, TA, Command Media Access Control, MAC, control element from the eNB (104) comprising a TA for a subsequent transmission from the UE (102, 200) to the eNB (104);

    wherein the processing circuitry is further arranged to:

    map the Rx-Tx time difference to a Rx-Tx time difference value based on a first or second table, the first table selected when the UE (102, 200) is a Time Division Duplexing, TDD, UE and the second table selected when the UE (102, 200) is a Frequency Division Duplexing, FDD, UE, the first and second tables comprising different mappings between a measured Rx-Tx time difference and a Rx-Tx time difference value;
    **characterised in that** the first table comprises a $2T_s$ resolution for a Rx-Tx time difference of less than

$4720T_s$ and an $8T_s$ resolution for a Rx-Tx time difference of at least $4720T_s$; and
wherein, when the first table is selected, a Rx-Tx time difference value of 0 for a Rx-Tx time difference of less than $626T_s$ is selected.

2. The apparatus of claim 1, wherein:

the first table comprises an offset for a first Rx-Tx time difference value to set the first Rx-Tx time difference value of the first table to apply to a first set of Rx-Tx time differences, and
the second table is free from an offset for the first Rx-Tx time difference value to set the first Rx-Tx time difference value of the second table to apply to a second set of Rx-Tx time differences, and a maximum time difference of the first set of Rx-Tx time differences is larger than a maximum time difference of the second set of Rx-Tx time differences, and the offset is at least one of $624T_s$ or accounts for a time for the TDD UE (102, 200) to switch between transmit and receive chains.

3. The apparatus of any one or more of claims 1-2, wherein the first and second table use different resolutions for different Rx-Tx time differences in mappings between the Rx-Tx time difference and the Rx-Tx time difference value.

4. The apparatus of any one or more of claims 1-3, wherein, when the second table is selected, a Rx-Tx time difference value of 4095 for a Rx-Tx time difference of at least $21096T_s$ is selected.

5. The apparatus of any one or more of claims 1-4, wherein:
a range of Rx-Tx time difference values in the report is independent of whether the first or second table is used.

6. An apparatus of an evolved NodeB, eNB, (104) comprising:

a memory; and
processing circuitry in communication with the memory and arranged to:

generate, for transmission to and measurement by a user equipment, UE, a cell specific reference signal;
decode a reception, Rx,-transmission, Tx, time difference value received in a report from the UE; and
generate, for transmission to the UE (102, 200), a Timing Advance, TA, Command Media Access Control, MAC, control element to adjust the TA based on the Rx-Tx time difference value, wherein the processing circuitry is further arranged to:

map the Rx-Tx time difference value to a Rx-Tx time difference based on a first table when the UE (102, 200) is a Time Division Duplexing, TDD, UE and a second table when the UE (102, 200) is a Frequency Division Duplexing, FDD, UE, the first and second tables comprising different mappings between a measured Rx-Tx time difference and a Rx-Tx time difference value, the first and second tables stored in memory;
**characterised in that** the first table comprises a $2T_s$ resolution for a Rx-Tx time difference of less than $4720T_s$ and an $8T_s$ resolution for a Rx-Tx time difference of at least $4720T_s$; and
wherein, when the first table is selected, a Rx-Tx time difference value of 0 for a Rx-Tx time difference of less than $626T_s$ is selected.

7. The apparatus of claim 6, wherein:

the first table comprises an offset for a first Rx-Tx time difference value to set the first Rx-Tx time difference value of the first table to apply to a first set of Rx-Tx time differences, and
the second table is free from an offset for the first Rx-Tx time difference value to set the first Rx-Tx time difference value of the second table to apply to a second set of Rx-Tx time differences, and a maximum time difference of the first set of Rx-Tx time differences is larger than a maximum time difference of the second set of Rx-Tx time differences.

8. The apparatus of claim 6 or 7, wherein at least one of:
the first table comprises a 2T, resolution for a Rx-Tx time difference of less than $4720T_s$ and an $8T_s$ resolution for a Rx-Tx time difference of at least $4720T_s$ or the first and second tables use different resolutions for different Rx-Tx time differences in mappings between the Rx-Tx time difference and the Rx-Tx time difference value.

9. The apparatus of any one or more of claims 6-8, wherein at least one of:
the first table comprises a Rx-Tx time difference value of 0 for a Rx-Tx time difference of less than $626T_s$, the first table comprises a Rx-Tx time difference value of 4095 for a Rx-Tx time difference of at least $21096T_s$, or a range of Rx-Tx time difference values in the report is independent of whether the first or second table is used.

10. The apparatus of any one or more of claims 6-9, wherein the processing circuitry is further arranged to:
generate, for transmission to an Evolved Serving Mobile Location Center (E-SMLC), the TA for Enhanced Cell Identification, ECID, to determine a location of the UE.

11. A computer-readable storage medium that stores instructions for execution by one or more processors of a user equipment, UE, (102, 200) the one or more processors to configure the UE (102, 200) to:

measure a reception, Rx,-transmission, Tx, time difference of a reference signal from an evolved NodeB, eNB (104);
determine a Rx-Tx time difference value based on the Rx-Tx time difference, a range of Rx-Tx time difference values independent of whether the UE (102, 200) is a Frequency Division Duplexing, FDD, UE (102, 200) or a Time Division Duplexing, TDD, UE (102, 200); and
transmit to the eNB (104) a report comprising the Rx-Tx time difference value to determine a timing advance, TA, of the apparatus, wherein the one or more processors further configure the UE (102, 200) to:
map the Rx-Tx time difference to a Rx-Tx time difference value based on a first or second table, the first table selected when the UE (102, 200) is a Time Division Duplexing, TDD, UE (102, 200) and the second table selected when the UE (102, 200) is a Frequency Division Duplexing, FDD, UE, the first and second tables comprising different mappings between a measured Rx-Tx time difference and a Rx-Tx time difference value;
**characterised in that** the first table comprises a $2T_s$ resolution for a Rx-Tx time difference of less than $4720T_s$ and an $8T_s$ resolution for a Rx-Tx time difference of at least $4720T_s$; and
wherein, when the first table is selected, a Rx-Tx time difference value of 0 for a Rx-Tx time difference of less than $626T_s$ is selected.

12. The medium of claim 11, wherein the one or more processors further configure the UE (102, 200) to:

store a first and second table, the first and second table comprising different relationships between a Rx-Tx time difference and a Rx-Tx time difference value, select the first table when the apparatus is a TDD UE and the second table when the apparatus is an FDD UE, and
convert the Rx-Tx time difference and to the Rx-Tx time difference value using the selected first or second table.

13. The medium of claim 12, wherein:

the first table comprises an offset for a first Rx-Tx time difference value to set the first Rx-Tx time difference value of the first table to apply to a first range of Rx-Tx time differences, and
the second table is free from an offset for the first Rx-Tx time difference value to set the first Rx-Tx time difference value of the second table to apply to a second range of Rx-Tx time differences that is smaller than the first range of Rx-Tx time differences, and the offset accounts for a time for the TDD UE to switch between transmit and receive chains.

**Patentansprüche**

1. Vorrichtung einer Benutzervorrichtung, UE, (102, 200), wobei die Vorrichtung umfasst:

einen Speicher; und
eine Verarbeitungsschaltung, die in Kommunikation mit dem Speicher steht und eingerichtet ist zum:

Messen einer Empfangs-, Rx-, Sende-, Tx-Zeitdifferenz eines zellspezifischen Referenzsignals von einer Primärzelle, PCell, eines evolved NodeB, eNB, (104), wobei die Rx-Tx-Zeitdifferenz eine Zeitdifferenz zwischen einem empfangenen Timing eines Downlink-Funkrahmens von der PCell, definiert durch einen ersten detektierten Pfad in der Zeit, und einem Sende-Timing eines Uplink-Funkrahmens umfasst, wobei die Rx-Tx-Zeitdifferenz an einem Antennenanschluss des UE (102, 200) gemessen wird;

Senden, von der Verarbeitungsschaltungsanordnung zur Übertragung an den eNB, eines Berichts, der den Rx-Tx-Zeitdifferenzwert umfasst; und

nach der Übertragung des Berichts ein Timing Advance, TA, Command Media Access Control, MAC, Steuerelement von dem eNB (104) zu dekodieren, das ein TA für eine nachfolgende Übertragung von dem UE (102, 200) zu dem eNB (104) umfasst; wobei die Verarbeitungsschaltungsanordnung ferner eingerichtet ist zum:

Abbilden der Rx-Tx-Zeitdifferenz auf einen Rx-Tx-Zeitdifferenzwert basierend auf einer ersten oder zweiten Tabelle, wobei die erste Tabelle ausgewählt wird, wenn die UE (102, 200) ein Time Division Duplexing, TDD, UE ist, und die zweite Tabelle ausgewählt wird, wenn die UE (102, 200) ein Frequency Division Duplexing, FDD, UE ist, wobei die erste und zweite Tabelle unterschiedliche Abbildungen zwischen einer gemessenen Rx-Tx-Zeitdifferenz und einem Rx-Tx-Zeitdifferenzwert umfassen **dadurch gekennzeichnet, dass** die erste Tabelle eine $2T_s$-Auflösung für eine Rx-Tx-Zeitdifferenz von weniger als $4720T_s$ und eine $8T_s$-Auflösung für eine Rx-Tx-Zeitdifferenz von mindestens $4720T_s$ umfasst; und

wobei, wenn die erste Tabelle ausgewählt wird, ein Rx-Tx-Zeitdifferenzwert von o für eine Rx-Tx-Zeitdifferenz von weniger als $626T_s$ ausgewählt wird.

2. Vorrichtung nach Anspruch 1, wobei:

die erste Tabelle einen Offset für einen ersten Rx-Tx-Zeitdifferenzwert umfasst, um den ersten Rx-Tx-Zeitdifferenzwert der ersten Tabelle so einzustellen, dass er für einen ersten Satz von Rx-Tx-Zeitdifferenzen gilt, und die zweite Tabelle frei von einem Offset für den ersten Rx-Tx-Zeitdifferenzwert ist, um den ersten Rx-Tx-Zeitdifferenzwert der zweiten Tabelle so einzustellen, dass er für einen zweiten Satz von Rx-Tx-Zeitdifferenzen gilt, und eine maximale Zeitdifferenz des ersten Satzes von Rx-Tx-Zeitdifferenzen größer ist als eine maximale Zeitdifferenz des zweiten Satzes von Rx-Tx-Zeitdifferenzen, und der Offset mindestens eines von $624T_s$ ist oder eine Zeit für das TDD-UE (102, 200) zum Umschalten zwischen Sende- und Empfangsketten berücksichtigt.

3. Vorrichtung nach einem oder mehreren der Ansprüche 1 bis 2, wobei die erste und die zweite Tabelle unterschiedliche Auflösungen für unterschiedliche Rx-Tx-Zeitdifferenzen in Mappings zwischen der Rx-Tx-Zeitdifferenz und dem Rx-Tx-Zeitdifferenzwert verwenden.

4. Vorrichtung nach einem oder mehreren der Ansprüche 1-3, wobei, wenn die zweite Tabelle ausgewählt wird, ein Rx-Tx-Zeitdifferenzwert von 4095 für eine Rx-Tx-Zeitdifferenz von mindestens $21096T_s$ ausgewählt wird.

5. Vorrichtung nach einem oder mehreren der Ansprüche 1-4, wobei:
ein Bereich von Rx-Tx-Zeitdifferenzwerten in dem Bericht unabhängig davon ist, ob die erste oder zweite Tabelle verwendet wird.

6. Vorrichtung eines evolved NodeB, eNB, (104), umfassend:

einen Speicher; und
eine Verarbeitungsschaltung, die mit dem Speicher in Verbindung steht und eingerichtet ist zum

Erzeugen, zum Senden an und Messung durch eine Benutzervorrichtung, UE, eines zellenspezifischen Referenzsignals,
Dekodieren eines Empfangs-, Rx-, Sende-, Tx-Zeitdifferenzwertes, der in einem Bericht von der UE empfangen wird; und

Erzeugen, zum Senden an die UE (102, 200), eines Timing Advance, TA, Befehls Media Access Control, MAC, Steuerelements um den TA basierend auf dem Rx-Tx-Zeitdifferenzwert anzupassen, wobei die Verarbeitungsschaltung ferner eingerichtet ist zum:
Abbilden des Rx-Tx-Zeitdifferenzwerts auf eine Rx-Tx-Zeitdifferenz basierend auf einer ersten Tabelle, wenn die UE (102, 200) eine Time Division Duplexing, TDD, UE ist, und einer zweiten Tabelle, wenn die UE (102, 200) eine Frequency Division Duplexing, FDD, UE ist, wobei die erste und die zweite Tabelle unterschiedliche Abbildungen zwischen einer gemessenen Rx-Tx-Zeitdifferenz und einem Rx-Tx-Zeitdifferenzwert umfassen, wobei die erste und die zweite Tabelle in dem Speicher gespeichert sind;
**dadurch gekennzeichnet, dass** die erste Tabelle eine $2T_s$-Auflösung für eine Rx-Tx-Zeitdifferenz von weniger als $4720T_s$ und eine $8T_s$-Auflösung für eine Rx-Tx-Zeitdifferenz von mindestens $4720T_s$ umfasst; und

wobei, wenn die erste Tabelle ausgewählt wird, ein Rx-Tx-Zeitdifferenzwert von o für eine Rx-Tx-Zeitdifferenz von weniger als 626$T_s$ ausgewählt wird.

7. Vorrichtung nach Anspruch 6, wobei:

die erste Tabelle einen Offset für einen ersten Rx-Tx-Zeitdifferenzwert umfasst, um den ersten Rx-Tx-Zeitdifferenzwert der ersten Tabelle so einzustellen, dass er für einen ersten Satz von Rx-Tx-Zeitdifferenzen gilt, und die zweite Tabelle frei von einem Offset für den ersten Rx-Tx-Zeitdifferenzwert ist, um den ersten Rx-Tx-Zeitdifferenzwert der zweiten Tabelle so einzustellen, dass er für einen zweiten Satz von Rx-Tx-Zeitdifferenzen gilt, und eine maximale Zeitdifferenz des ersten Satzes von Rx-Tx-Zeitdifferenzen größer ist als eine maximale Zeitdifferenz des zweiten Satzes von Rx-Tx-Zeitdifferenzen.

8. Vorrichtung nach Anspruch 6 oder 7, wobei mindestens eine von:

die erste Tabelle umfasst eine 2T, Auflösung für eine Rx-Tx-Zeitdifferenz von weniger als 4720$T_s$ und eine 8$T_s$ Auflösung für eine Rx-Tx-Zeitdifferenz von mindestens 4720$T_s$, oder
die erste und die zweite Tabelle verwenden unterschiedliche Auflösungen für unterschiedliche Rx-Tx-Zeitdifferenzen in Abbildungen zwischen der Rx-Tx-Zeitdifferenz und dem Rx-Tx-Zeitdifferenzwert.

9. Vorrichtung nach einem oder mehreren der Ansprüche 6-8, wobei mindestens eine von:
die erste Tabelle umfasst einen Rx-Tx-Zeitdifferenzwert von o für eine Rx-Tx-Zeitdifferenz von weniger als 626$T_s$ umfasst, die erste Tabelle einen Rx-Tx-Zeitdifferenzwert von 4095 für eine Rx-Tx-Zeitdifferenz von mindestens 21096$T_s$ umfasst, oder ein Bereich von Rx-Tx-Zeitdifferenzwerten in dem Bericht unabhängig davon ist, ob die erste oder die zweite Tabelle verwendet wird.

10. Vorrichtung nach einem oder mehreren der Ansprüche 6 bis 9, wobei die Verarbeitungsschaltung ferner eingerichtet ist zum:
Erzeugen, zum Senden an ein Evolved Serving Mobile Location Center (E-SMLC), der TA für Enhanced Cell Identification, ECID, um einen Standort der UE zu bestimmen.

11. Computerlesbares Speichermedium, das Anweisungen zur Ausführung durch einen oder mehrere Prozessoren einer Benutzervorrichtung, UE, (102, 200) speichert, wobei der eine oder die mehreren Prozessoren die UE (102, 200) konfigurieren zum:

Messen einer Empfangs-, Rx-, Sende-, Tx-Zeitdifferenz eines Referenzsignals von einem evolved NodeB, eNB (104);
Bestimmen eines Rx-Tx-Zeitdifferenzwertes basierend auf der Rx-Tx-Zeitdifferenz, eines Bereiches von Rx-Tx-Zeitdifferenzwerten, unabhängig davon, ob die UE (102, 200) eine Frequency Division Duplexing, FDD, UE (102, 200) oder eine Time Division Duplexing, TDD, UE (102, 200) ist; und
Senden, an den eNB (104), eines Berichts, der den Rx-Tx-Zeitdifferenzwert umfasst, um eine Zeitvorverlegung, TA, der Vorrichtung zu bestimmen, wobei der eine oder die mehreren Prozessoren die UE (102, 200) ferner konfigurieren zum:

Abbilden der Rx-Tx-Zeitdifferenz auf einen Rx-Tx-Zeitdifferenzwert basierend auf einer ersten oder zweiten Tabelle, wobei die erste Tabelle ausgewählt wird, wenn die UE (102, 200) eine Time Division Duplexing, TDD, UE (102, 200) ist, und die zweite Tabelle ausgewählt wird, wenn die UE (102, 200) eine Frequency Division Duplexing, FDD, UE ist, wobei die erste und zweite Tabelle unterschiedliche Abbildungen zwischen einer gemessenen Rx-Tx-Zeitdifferenz und einem Rx-Tx-Zeitdifferenzwert umfassen, **dadurch gekennzeichnet, dass** die erste Tabelle eine 2$T_s$-Auflösung für eine Rx-Tx-Zeitdifferenz von weniger als 4720$T_s$ und eine 8$T_s$-Auflösung für eine Rx-Tx-Zeitdifferenz von mindestens 4720$T_s$ umfasst; und
wobei, wenn die erste Tabelle ausgewählt wird, ein Rx-Tx-Zeitdifferenzwert von o für eine Rx-Tx-Zeitdifferenz von weniger als 626$T_s$ ausgewählt wird.

12. Medium nach Anspruch 11, wobei der eine oder die mehreren Prozessoren die UE (102, 200) weiter konfigurieren zum:

Speichern einer ersten und einer zweiten Tabelle, wobei die erste und die zweite Tabelle unterschiedliche Beziehungen zwischen einer Rx-Tx-Zeitdifferenz und einem Rx-Tx-Zeitdifferenzwert umfassen,

Auswählen der ersten Tabelle, wenn die Vorrichtung eine TDD UE ist, und der zweiten Tabelle, wenn die Vorrichtung eine FDD UE ist, und

Konvertieren der Rx-Tx-Zeitdifferenz und in den Rx-Tx-Zeitdifferenzwert unter Verwendung der ausgewählten ersten oder zweiten Tabelle.

**13.** Medium nach Anspruch 12, wobei

die erste Tabelle einen Offset für einen ersten Rx-Tx-Zeitdifferenzwert umfasst, um den ersten Rx-Tx-Zeitdifferenzwert der ersten Tabelle so einzustellen, dass er für einen ersten Bereich von Rx-Tx-Zeitdifferenzen gilt, und die zweite Tabelle frei von einem Offset für den ersten Rx-Tx-Zeitdifferenzwert ist, um den ersten Rx-Tx-Zeitdifferenzwert der zweiten Tabelle so einzustellen, dass er für einen zweiten Bereich von Rx-Tx-Zeitdifferenzen gilt, der kleiner ist als der erste Bereich von Rx-Tx-Zeitdifferenzen, und der Offset eine Zeit für das TDD-UE berücksichtigt, um zwischen Sende- und Empfangsketten zu wechseln.

**Revendications**

**1.** Un appareil d'équipement utilisateur, UE (102, 200), l'appareil comprenant :

une mémoire ; et
une circuiterie de traitement en communication avec la mémoire et agencée pour :

mesurer une différence de temps réception, Rx, -émission, Tx, d'un signal de référence spécifique de cellule provenant d'une cellule primaire, PCell, d'un NœudB évolué, eNB, (104), la différence de temps Rx-Tx comprenant une différence de temps entre un séquencement reçu d'une trame radio de liaison descendante provenant de la PCell, définie par un premier trajet détecté dans le temps, et un séquencement d'émission d'une trame radio de liaison montante, la différence de temps Rx-Tx étant mesurée au niveau d'un connecteur d'antenne de l'UE (102, 200) ;
envoyer, depuis la circuiterie de traitement pour transmission à l'eNB, un rapport comprenant la valeur de différence de temps Rx-Tx ; et
après transmission du rapport, décoder un élément de contrôle de Contrôle d'accès au support, MAC, d'ordre d'Avance de séquencement, TA, en provenance de l'eNB (104) comprenant une TA pour une transmission ultérieure de l'UE (102, 200) à l'eNB (104) ;

dans lequel la circuiterie de traitement est en outre agencée pour :
mapper la différence de temps Rx-Tx à une valeur de différence de temps Rx-Tx sur la base d'une première ou d'une seconde table, la première table étant sélectionnée lorsque l'UE (102, 200) est un UE à Duplexage par répartition dans le temps, TDD, et la seconde table étant sélectionnée lorsque l'UE (102, 200) est un UE à Duplexage par répartition en fréquence, FDD, les première et seconde tables comprenant des mappages différents entre une différence de temps Rx-Tx mesurée et une valeur de différence de temps Rx-Tx ;

**caractérisé en ce que**

la première table comprend une résolution $2T_s$ pour une différence de temps Rx-Tx de moins de $4720T_s$ et une résolution $8T_s$ pour une différence de temps Rx-Tx d'au moins $4720T_s$ ; et
dans lequel, lorsque la première table est sélectionnée, une valeur de différence de temps Rx-Tx de 0 pour une différence de temps Rx-Tx de moins de $626T_s$ est sélectionnée.

**2.** L'appareil selon la revendication 1, dans lequel :

la première table comprend un décalage pour une première valeur de différence de temps Rx-Tx afin d'établir la première valeur de différence de temps Rx-Tx de la première table pour une application à un premier ensemble de différences de temps Rx-Tx, et
la seconde table est dépourvue de décalage pour la première valeur de différence de temps Rx-Tx afin d'établir la première valeur de différence de temps Rx-Tx de la seconde table pour une application à un second ensemble de différences de temps Rx-Tx, et une différence de temps maximale du premier ensemble de différences de temps Rx-Tx est plus grande qu'une différence de temps maximale du second ensemble de différences de temps Rx-Tx, et le décalage est $624T_s$ et/ou représente un temps nécessaire à l'UE (102, 200) à TDD pour commuter entre des chaînes d'émission et de réception.

3. L'appareil selon une ou plusieurs des revendications 1 et 2, dans lequel les première et seconde tables utilisent des résolutions différentes pour des différences de temps Rx-Tx différentes dans des mappages entre la différence de temps Rx-Tx et la valeur de différence de temps Rx-Tx.

4. L'appareil selon une ou plusieurs des revendications 1 à 3, dans lequel, lorsque la seconde table est sélectionnée, une valeur de différence de temps Rx-Tx de 4095 pour une différence de temps Rx-Tx d'au moins 21 096$T_s$ est sélectionnée.

5. L'appareil selon une ou plusieurs des revendications 1 à 4, dans lequel :
une plage de valeurs de différence de temps Rx-Tx dans le rapport est indépendante du fait que la première ou bien la seconde table est utilisée.

6. Un appareil d'un NœudB évolué, eNB (104) comprenant :

une mémoire ; et
une circuiterie de traitement en communication avec la mémoire et agencée pour :

générer, pour transmission à un équipement utilisateur, UE et mesure par celui-ci, un signal de référence spécifique de cellule ;
décoder une valeur de différence de temps réception, Rx, -émission, Tx, reçue dans un rapport en provenance de l'UE ; et
générer, pour transmission à l'UE (102, 200), un élément de contrôle de Contrôle d'accès au support, MAC, d'ordre d'Avance de séquencement, TA, pour ajuster la TA sur la base de la valeur de différence de temps Rx-Tx,

dans lequel la circuiterie de traitement est en outre agencée pour :
mapper la valeur de différence de temps Rx-Tx à une différence de temps Rx-Tx sur la base d'une première table lorsque l'UE (102, 200) est un UE à Duplexage par répartition dans le temps, TDD, et d'une seconde table lorsque l'UE (102, 200) est un UE à Duplexage par répartition en fréquence, FDD, les première et seconde tables comprenant des mappages différents entre une différence de temps Rx-Tx mesurée et une valeur de différence de temps Rx-Tx, les première et seconde tables étant stockées dans la mémoire ;

**caractérisé en ce que**

la première table comprend une résolution $2T_s$ pour une différence de temps Rx-Tx de moins de 4720$T_s$ et une résolution $8T_s$ pour une différence de temps Rx-Tx d'au moins 4720$T_s$ ; et
dans lequel, lorsque la première table est sélectionnée, une valeur de différence de temps Rx-Tx de 0 pour une différence de temps Rx-Tx de moins de 626$T_s$ est sélectionnée.

7. L'appareil selon la revendication 6, dans lequel :

la première table comprend un décalage pour une première valeur de différence de temps Rx-Tx afin d'établir la première valeur de différence de temps Rx-Tx de la première table pour une application à un premier ensemble de différences de temps Rx-Tx, et
la seconde table est dépourvue de décalage pour la première valeur de différence de temps Rx-Tx afin d'établir la première valeur de différence de temps Rx-Tx de la seconde table pour une application à un second ensemble de différences de temps Rx-Tx, et une différence de temps maximale du premier ensemble de différences de temps Rx-Tx est plus grande qu'une différence de temps maximale du second ensemble de différences de temps Rx-Tx.

8. L'appareil selon la revendication 6 ou 7, dans lequel :

la première table comprend une résolution $2T_s$ pour une différence de temps Rx-Tx de moins de 4720$T_s$ et une résolution $8T_s$ pour une différence de temps Rx-Tx d'au moins 4720$T_s$ et/ou
les première et seconde tables utilisent des résolutions différentes pour des différences de temps Rx-Tx différentes dans des mappages entre la différence de temps Rx-Tx et la valeur de différence de temps Rx-Tx.

9. L'appareil selon une ou plusieurs des revendications 6 à 8, dans lequel :
la première table comprend une valeur de différence de temps Rx-Tx de 0 pour une différence de temps Rx-Tx de moins de $626T_s$, la première table comprend une valeur de différence de temps Rx-Tx de 4095 pour une différence de temps Rx-Tx d'au moins $21\,096T_s$, et/ou une plage de valeurs de différence de temps Rx-Tx dans le rapport est indépendante de l'utilisation de la première ou de la seconde table.

10. L'appareil selon une ou plusieurs des revendications 6 à 9, dans lequel la circuiterie de traitement est en outre agencée pour :
générer, pour transmission à un Centre de localisation de mobile de desserte évolué (E-SMLC), la TA pour une Identification de cellule améliorée, ECID, afin de déterminer un emplacement de l'UE.

11. Un support de stockage lisible par calculateur qui stocke des instructions à exécuter par un ou plusieurs processeurs d'un équipement utilisateur, UE, (102, 200) les un ou plusieurs processeurs étant destinés à configurer l'UE (102, 200) pour :

mesurer une différence de temps réception, Rx, -émission, Tx, d'un signal de référence provenant d'un NœudB évolué, eNB (104) ;
déterminer une valeur de différence de temps Rx-Tx sur la base de la différence de temps Rx-Tx, une plage de valeurs de différence de temps Rx-Tx étant indépendante du fait que l'UE (102, 200) est un UE (102, 200) à Duplexage par répartition en fréquence, FDD, ou un UE (102, 200) à Duplexage par répartition dans le temps, TDD ; et
transmettre à l'eNB (104) un rapport comprenant la valeur de différence de temps Rx-Tx pour déterminer une Avance de séquencement, TA, de l'appareil,
dans lequel les un ou plusieurs processeurs configurent en outre l'UE (102, 200) pour :
mapper la différence de temps Rx-Tx à une valeur de différence de temps Rx-Tx sur la base d'une première ou d'une seconde table, la première table étant sélectionnée lorsque l'UE (102, 200) est un UE (102, 200) à Duplexage par répartition dans le temps, TDD, et la seconde table étant sélectionnée lorsque l'UE (102, 200) est un UE à Duplexage par répartition en fréquence, FDD, les première et seconde tables comprenant des mappages différents entre une différence de temps Rx-Tx mesurée et une valeur de différence de temps Rx-Tx ;

**caractérisé en ce que**

la première table comprend une résolution $2T_s$ pour une différence de temps Rx-Tx de moins de $4720T_s$ et une résolution $8T_s$ pour une différence de temps Rx-Tx d'au moins $4720T_s$ ; et
dans lequel, lorsque la première table est sélectionnée, une valeur de différence de temps Rx-Tx de 0 pour une différence de temps Rx-Tx de moins de $626T_s$ est sélectionnée.

12. Le support selon la revendication 11, dans lequel les un ou plusieurs processeurs configurent en outre l'UE (102, 200) pour :

stocker une première et une seconde table, les première et seconde tables comprenant des relations différentes entre une différence de temps Rx-Tx et une valeur de différence de temps Rx-Tx,
sélectionner la première table lorsque l'appareil est un UE à TDD et la seconde table lorsque l'appareil est un UE à FDD, et
convertir la différence de temps Rx-Tx en valeur de différence de temps Rx-Tx à l'aide de la première ou de la seconde table sélectionnée.

13. Le support selon la revendication 12, dans lequel :

la première table comprend un décalage pour une première valeur de différence de temps Rx-Tx afin d'établir la première valeur de différence de temps Rx-Tx de la première table pour une application à une première plage de différences de temps Rx-Tx, et
la seconde table est dépourvue de décalage pour la première valeur de différence de temps Rx-Tx afin d'établir la première valeur de différence de temps Rx-Tx de la seconde table pour une application à une seconde plage de différences de temps Rx-Tx qui est plus petite que la première plage de différences de temps Rx-Tx, et le décalage représente un temps nécessaire à l'UE à TDD pour commuter entre des chaînes d'émission et de réception.

**FIG. 1**

**FIG. 2**

EP 3 414 934 B1

FIG. 3

400

408

402
PROCESSOR
424 — INSTRUCTIONS

VIDEO DISPLAY — 410

404
MAIN MEMORY
424 — INSTRUCTIONS

ALPHA-NUMERIC
INPUT DEVICE — 412

406
STATIC MEMORY

UI NAVIGATION
DEVICE — 414

BUS

DRIVE UNIT — 416
MACHINE READABLE
MEDIUM — 422
INSTRUCTIONS — 424

420 — NETWORK
INTERFACE DEVICE

426 — NETWORK

SIGNAL
GENERATION DEVICE — 418

421 — SENSORS

OUTPUT CONTROLLER — 428

*FIG. 4*

FIG. 5

FIG. 6

**EP 3 414 934 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62292724
- US 2016007222 A1
- US 2013137454 A1